# EUROPEAN PATENT APPLICATION

(11) **EP 3 378 836 A1**
(43) Date of publication of application: **26.09.2018**
(21) Application number: 15908694.1
(22) Date of filing: 19.11.2015
(51) Int. Cl.: C02F 1/00, B01D 61/10, B01D 61/58, C02F 1/44

(54) **MOBILE POWER GENERATION/WATER PURIFICATION SYSTEM**

(71) Applicant: Techno System Co.,Ltd., Yokohama-shi, Kanagawa 220-8119 (JP)
(72) Inventor: IKUTA, Naoyuki, Yokohama-shi Kanagawa 236-0054 (JP)
(74) Representative: Mounteney, Simon James
(86) International application number: PCT/JP2015/005783
(87) International publication number: WO 2017/085754

(57) **Abstract**

An object of the present invention is to secure a large amount of clean potable water in a short amount of time in cases in which water supply is cut due to a disaster, such as an earthquake, by facilitating movement of the mobile power generation/water purification system to a water source at the location of the disaster and driving a drive means using electric power supply from a photovoltaic power generation device as a power source.
The present invention is a mobile power generation/water purification system that includes, in a housing thereof: a photovoltaic power generation device; a battery that stores electricity generated by the photovoltaic power generation device; a control unit that receives electric power from the battery; and a drive means that is controlled by the control unit and uses the battery as an electric power source. A water purification device is disposed inside the housing in a single flow path that can be connected to a suction hose and an outflow hose by respective connecting portions. The drive means of the water purification device is a plurality of drive pumps. The drive pumps are electrically connected to the battery by respective conductive cables. The photovoltaic power generation device is a solar panel that is wound around a rotation shaft inside the housing. When housing is placed horizontally, the solar panel can be pulled out directly in a horizontal direction from a horizontally elongated cutout window of the housing.

## Description

### BACKGROUND OF THE INVENTION

### 1. Field of the Invention

The present invention relates to a mobile power generation/water purification system. In particular, the present invention relates to a mobile power generation/water purification system that is capable of being used in cases in which water supply is cut due to a disaster, such as an earthquake.

### 2. Description of the Related Art

An emergency water purification device described in Patent Literature 1 includes a manually operated pump, a water distribution pipe, and a water purifying means that are provided inside a box-shaped housing. The water distribution pipe is connected to a discharge opening of the manually operated pump. The water distribution pipe guides water that has been pressurized and discharged by the manually operated pump along a predetermined flow path. The water purifying means is disposed in the water distribution pipe and includes a plurality of filters that purify the water that is being guided.

In the event of a disaster, the emergency water purification device is transported or appropriately carried to a water source. The water purification device draws water from the water source using a suction hose and the manually operated pump. The emergency water purification device is compact. Therefore, the emergency water purification device can be easily moved to the water source. Furthermore, the emergency purification device is advantageous in that the water purifying means purifies water as a result of the manually operated pump being operated, thereby enabling water for domestic use to be easily secured.

However, the emergency water purification device requires the manually operated pump to be driven by a lever handle being operated in an up/down motion, and therefore requires labor. That is, natural energy cannot be used as a power source. In addition, the plurality of filters are unable to desalinate seawater. Because of the reliance on labor, a large amount of potable water cannot be secured in a short amount of time. Furthermore, because the emergency water purification device is not provided with casters, the housing cannot be made to run on a road.

In this regard, Patent Literature 2 discloses the following. That is, a rectangular solar panel is provided on an upper surface of a box-shaped housing that is provided with casters. A battery provided inside the housing is charged, through a charging circuit, with electricity generated by the solar panel. In addition, a control device provided inside the housing controls illumination of lighting equipment that is attached to the housing by a support column.

However, while the technology in Patent Literature 2 is advantageous in that limitations regarding usage locations do not apply due to the use of a photovoltaic power generation device, the solar panel is a single plate-shaped solar panel of predetermined shape and size that is provided on the upper surface of the box-shaped housing. Therefore, a problem arises in that the amount of power generation is insufficient. In addition, the technology in Patent Literature 2 does not include a water purification device.

[Patent Literature 1] Japanese Registered Utility Model Publication No. 3023422
[Patent Literature 2] Japanese Patent Laid-open Publication No. 2010-34190

### SUMMARY OF THE INVENTION

A first object of the present invention is to effectively use the advantages of the technologies in Patent Literature 1 and Patent Literature 2, and secure a large amount of clean potable water in a short amount of time in cases in which water supply is cut due to a disaster such as an earthquake, by facilitating movement of the mobile power generation/water purification system to a water source at the location of the disaster and driving a drive means using electric power supply from a photovoltaic power generation device as a power source. In particular, during movement, main devices, such as the photovoltaic power generation device, a control unit, and a water purification device are all housed in a housing, in a manner similar to a suitcase for travel. Meanwhile, when the mobile power generation/water purification system is used, the housing is placed horizontally and a lid body is opened. A solar panel is pulled outside of the housing and spread on a road surface. As a result, the amount of power generation can be increased. In addition, the drive means can be immediately operated when the lid body is opened. Furthermore, a plurality of drive means are assembled in the housing, thereby enabling water to be sufficiently drawn and pumped.

A second object of the present invention is to enable desalination of seawater in cases in which the water source is seawater. A third object of the present invention is to effectively block coarse particles (dust) that flow through a pretreatment filter, and thereby prevent a reverse-osmosis (RO) membrane filter that composes a post-treatment filter from becoming easily clogged. A fourth object of the present invention is to protect a portion or the entirety of an exposed section of a conductive cable that runs from a case-shaped lid body side to a box-shaped main body side.

The above-described objects, other objects, and novel characteristics of the present invention will become more completely clear through reading of the description below, with reference to the accompanying drawings. However, the drawings are provided solely for explanatory purposes and do not limit the technical scope of the present invention.

A mobile power generation/water purification system of the present invention includes, in a housing thereof: a photovoltaic power generation device; a battery that stores electricity generated by the photovoltaic power generation device; a control unit that receives electric power from the battery; and a drive means that is controlled by the control unit and uses the battery as an electric power source. The housing is composed of a box-shaped main body that has an opening in an upper end and a case-shaped lid body that is provided in an openable/closable manner in the box-shaped main body with a hinge therebetween. A water purification device is disposed inside the housing in a single flow path that can be connected to a suction hose and an outflow hose by respective connecting portions. The drive means of the water purification device is a plurality of drive pumps. The drive pumps are electrically connected to the battery by respective conductive cables. The photovoltaic power generation device is a solar panel that is wound around a rotation shaft inside the housing. The solar panel can be pulled out directly from a horizontally elongated cutout window formed on one side wall of the housing.

In the above-described configuration, the water purification device is configured by a first drive pump that can be connected to a water source by the suction hose, a pretreatment filter that is disposed on a downstream side of the first drive pump, a second drive pump that is disposed on the downstream side of the pretreatment filter, and a post-treatment filter that is disposed on the downstream side of the second drive pump and desalinates seawater when the water source is seawater. In addition, the pretreatment filter includes at least a hollow fiber membrane filter, while the post-treatment filter includes a reverse-osmosis membrane filter. Furthermore, in the housing, a control box for the control unit and the battery are housed in a fixed manner in a recessing space in the case-shaped lid body, while the water purification device and the solar panel including the rotation shaft are housed in a recessing space in the box-shaped main body. A stretchable protector encases an exposed section of the conductive cables running from the case-shaped lid body side to the box-shaped main body side. One end portion of the protector is fixed to the control box side while another end portion thereof is fixed to the box-shaped main body side. Moreover, an operating panel of the control box appears when the case-shaped lid body is opened. The operating panel is provided with at least a power switch and a pressure gauge for the drive means. Still further, the housing is a rectangular parallelepiped in shape and can be carried with both hands. A plurality of swivel casters are attached to one side wall of the housing, and a handle is provided on another side wall thereof.

### EFFECTS OF THE INVENTION

(a) According to a first aspect of the invention, in cases in which water supply is cut due to a disaster, such as an earthquake, the mobile power generation/water purification system can be easily moved to a water source at the location of the disaster. In addition, a large amount of potable water can be secured without labor, as a result of the drive means being driven through use of electric power supply from the photovoltaic power generation device as a power source. In particular, during movement, main devices, such as the photovoltaic power generation device, the control unit, and the water purification device are all housed in the housing, in a manner similar to a suitcase for travel. Meanwhile, when the mobile power generation/water purification system is used, the housing is placed in a horizontal state and the lid body is opened. The solar panel is pulled outside of the housing and spread on a road surface. As a result, the amount of power generation can be increased. In addition, the power can be immediately turned "ON" when the lid body is opened. Furthermore, a plurality of drive means are assembled in the housing, thereby enabling water to be sufficiently drawn and pumped.
(b) According to a second aspect of the invention, in addition to achieving the effects in (a), described above, seawater can be desalinated when the water source is seawater.
(c) According to a third aspect of the invention, in addition to achieving the effects in (a), described above, for example, dust that has a particle size equal to or greater than 0.1 µ can be removed by the hollow fiber membrane filter of the pretreatment filter. Consequently, the RO membrane filter configuring the post-treatment filter is not easily clogged.
(e) According to a fourth aspect of the invention, the constituent components can be compactly housed. In addition, even when the lid body is opened and closed, the protector can sufficiently protect the exposed section of the conductive cables.
(f) According to a fifth aspect of the invention, the operating panel of the control box appears when the lid body is opened. The operating panel is provided with at least a power switch and a pressure gauge for the drive means. Therefore, the water purification device can be easily turned ON and OFF. In addition, a pressure state of the flow path can be monitored through the pressure gauge.
(g) According to a sixth aspect of the invention, the housing can be easily carried or moved to a desired location.

### BRIEF DESCRIPTION OF THE DRAWINGS

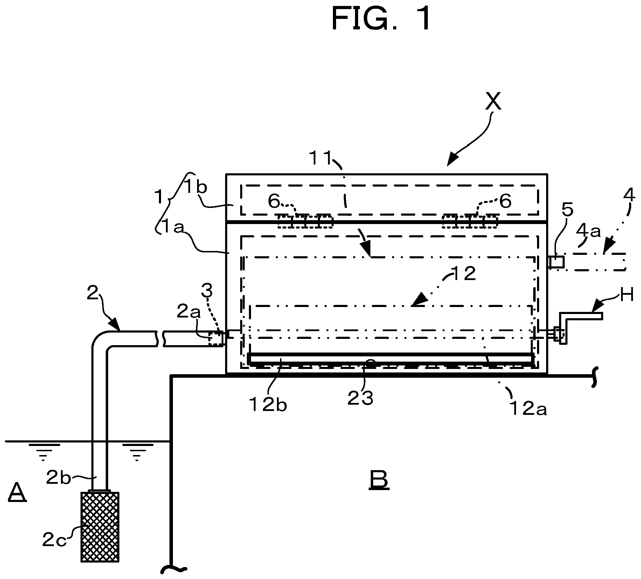

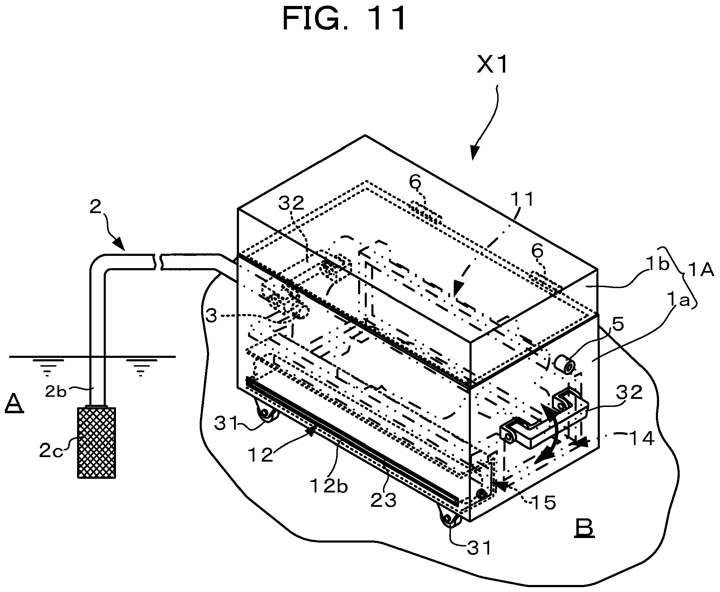

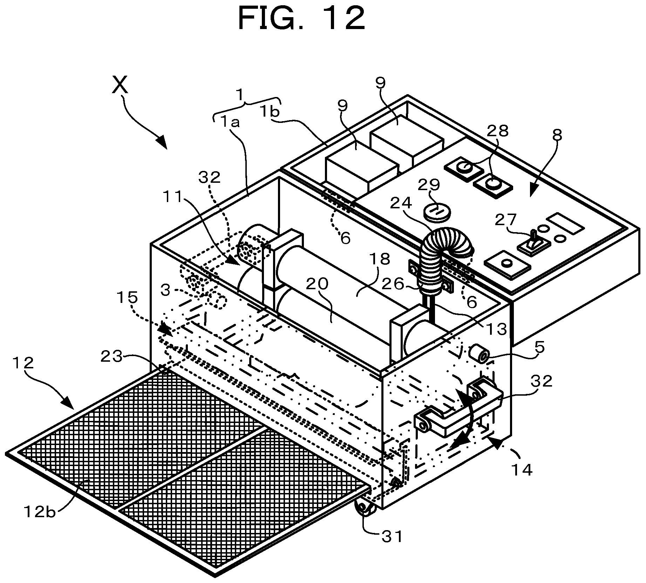

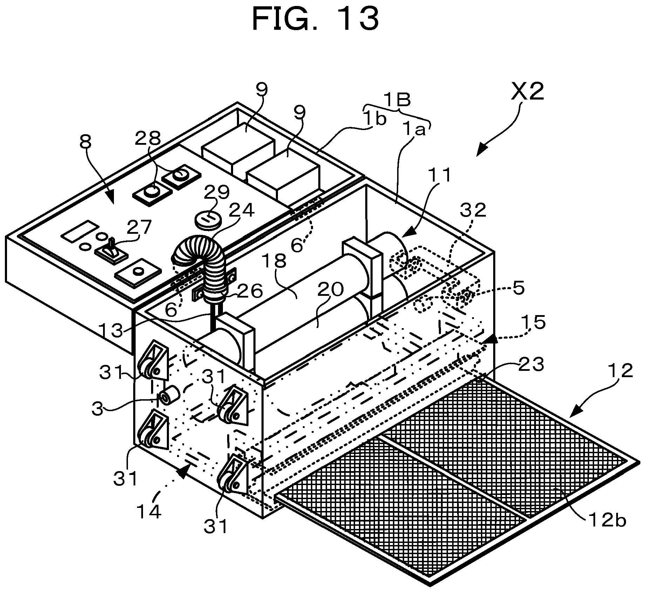

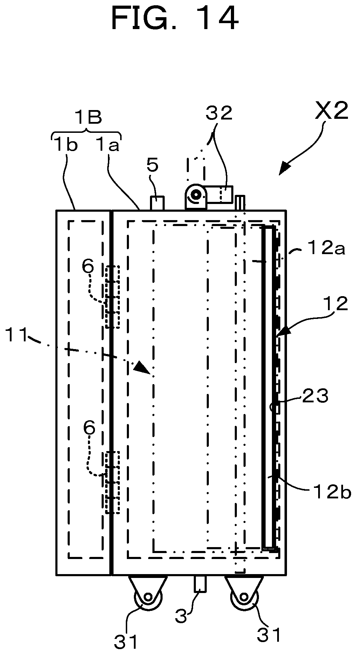

Fig. 1 to Fig. 10 are explanatory diagrams according to a first embodiment of the present invention. Fig. 11 and Fig. 12 are explanatory diagrams according to a second embodiment of the present invention. Fig. 13 and Fig. 14 are explanatory diagrams according to a third embodiment of the present invention.
Fig. 1 is an overall explanatory diagram in which a mobile power generation/water purification system of the present invention is set near a water source at a disaster location;
Fig. 2 is a perspective view of a housing (in a state in which a lid body is open);
Fig. 3 is an overall explanatory diagram of each section housed inside the housing;
Fig. 4 is an overall explanatory diagram of each device provided inside the housing;
Fig. 5 is a block diagram of a flow when seawater is turned into potable water through use of a water purification device;
Fig. 6 is an overall explanatory diagram of an example of a pretreatment filter configuring the water purification device;
Fig. 7 is an explanatory diagram of a hollow fiber membrane filter configuring the pretreatment filter;
Fig. 8 is an explanatory diagram of a photovoltaic power generation device;
Fig. 9 is an explanatory diagram of an attachment aspect of a conductive line protector;
Fig. 10 is a block diagram of a drive control system for a solar panel, a control unit, a battery, a drive means, and the like;
Fig. 11 is a perspective view according to a second embodiment of the present invention (in a state in which a housing is set in a horizontal state);
Fig. 12 is an explanatory diagram of a state in which a lid body is open and a solar panel is pulled out in Fig. 11;
Fig. 13 is a perspective view according to a third embodiment of the present invention; and
Fig. 14 is an explanatory diagram of a state in which a housing is set vertically on a ground surface.

### EXPLANATION OF REFERENCE NUMBERS

A: water source (such as an ocean)
B: land
X, X1, X2: mobile power generation/water purification system
1, 1A, 1B: housing
1a: box-shaped main body
1b: case-shaped lid body
2: suction hose
3: one connecting portion
4: outflow hose
5: other connecting portion
7: control unit
8: control box
9: battery
11: water purification device
12: photovoltaic power generation device
12a: rotation shaft
12b: solar panel
13: conductive cable
14: first support member
15: second support member
16: flow path
17: first drive pump (drive means)
19: second drive pump (drive means)
18: pretreatment filter
20: post-treatment filter
21: sterilizing means
31: swivel caster
32: handle

### DETAILED DESCRIPTION OF THE PREFERRED EMBODIMENTS

First, application of the present invention will be briefly described with reference to Fig. 1. X denotes a mobile power generation/water purification system that, particularly in cases in which a disaster such as an earthquake has occurred, can be carried to a water source at the location of the disaster. A housing 1 of the mobile power generation/water purification system X is a housing case composed of aluminum or duralumin. In a manner similar to a suitcase for travel, the housing 1 is a rectangular parallelepiped in shape and can be carried with one hand or both hands.

A water source A is a lake, a river, a pond, an ocean, or the like. For example, when the water source A is an ocean, the housing 1 is placed in a horizontal state in an appropriate location on land B. A base end portion 2a of a suction hose 2 is connected to one connecting portion 3 of the housing 1. In addition, a base end portion 4a of an outflow hose 4 is connected to another connecting portion 5 of the housing 1. Here, the suction hose 2 and the outflow hose 4 are not components that are housed in the housing 1. In addition, a wire mesh basket 2c is attached to a free end portion 2b of the suction hose 2 to prevent entry of debris.

Therefore, when potable water is secured, the basket 2c is sunk into the water source (such as an ocean) A. As a result of a drive means, described hereafter, being driven, seawater is drawn and purified by a water purification device 11 provided inside the housing 1. The purified water can then be removed taken out from the outflow hose 4 as potable water.

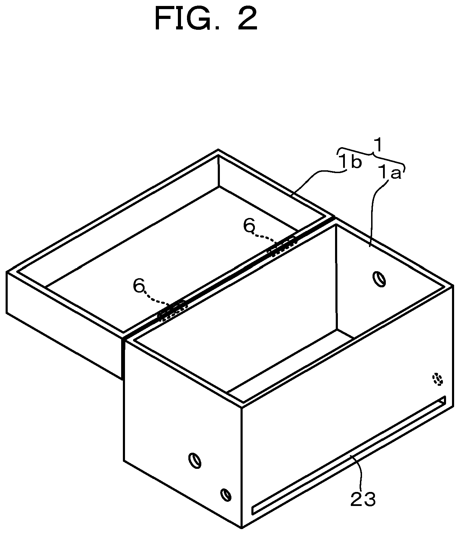

Next, each section will be described with reference to Fig. 2 to Fig. 10. The overall housing 1 is formed into a rectangular parallelepiped that has six surfaces. Fig. 2 is a perspective view of the housing 1 in a state in which a lid body is open. As shown in Fig. 2, the housing 1 is composed of a box-shaped main body 1a and a case-shaped lid body 1b. The box-shaped main body 1a has an opening on an upper end. The case-shaped lid body 1b is provided in an openable/closable manner in the box-shaped main body 1a with a hinge 6 therebetween. The box-shaped main body 1a has a relatively deep bottom.

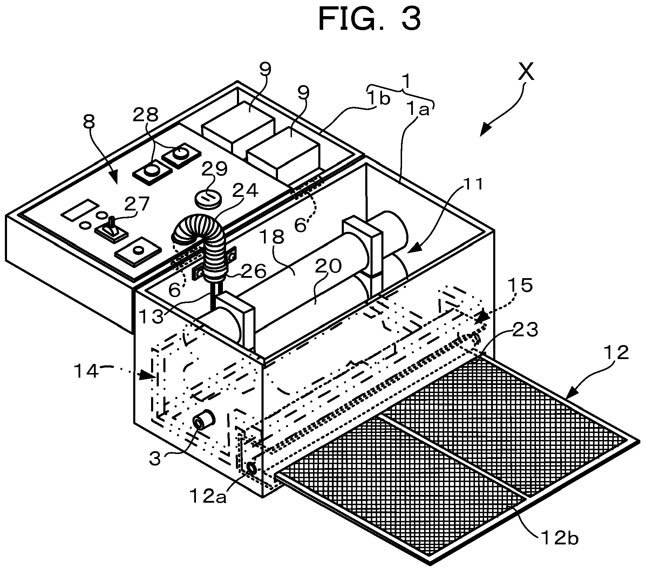

Next, Fig. 3 is an overall explanatory diagram of each section housed inside the housing 1. According to the embodiment, a control box 8 for a control unit 7 and a plurality of batteries 9 are housed in a fixed manner in a recessing space in the case-shaped lid body 1b. Meanwhile, the water purification device 11 and a photovoltaic power generation device 12 are each housed in a recessing space in the box-shaped main body 1a. The photovoltaic power generation device 12 is configured by a horizontally elongated bar-shaped rotation shaft 12a and a sheet-shaped solar panel 12b that is wound around the rotation shaft 12a.

The control unit 7, and a plurality of drive pumps (drive means) 17 and 19 of the water purification device 11 provided within the control box 8 are electrically connected to the batteries 9 by conductor cables 13. A first support member 14 and a second support member 15 are provided in a fixed manner inside the housing 1. The first support member 14 fixes each component configuring the water purification device 11. The second support member 15 encloses the photovoltaic power generation device 12 and supports the horizontally elongated bar-shaped rotation shaft 12a. The water purification device 11 is disposed in a single flow path 16 that is connected to the above-described connecting portions 3 and 5. The single flow path 16 is composed of a plurality of unnumbered pipes that connect the components of the water purification device 11 in a line.

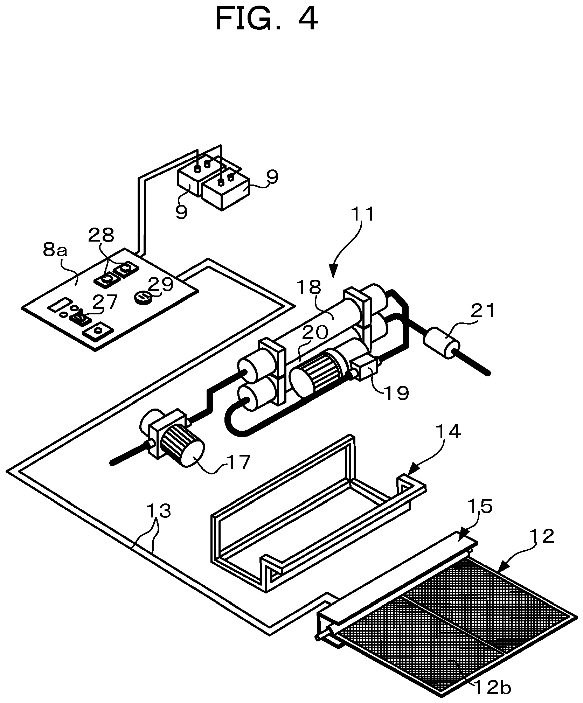

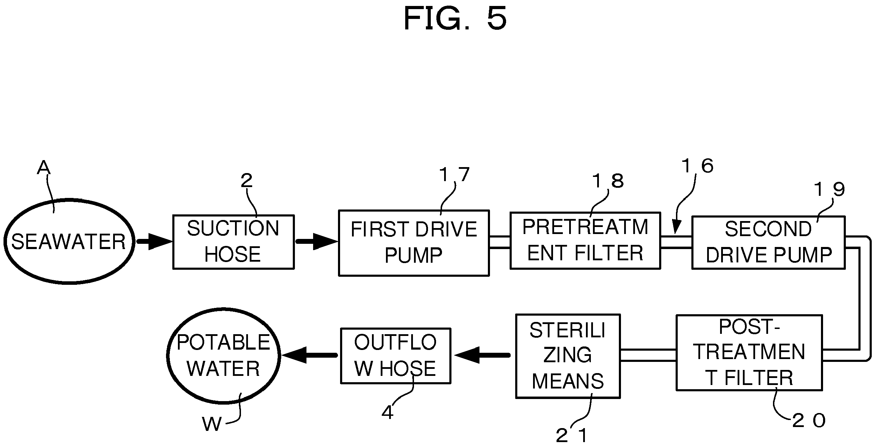

In addition, as shown in Fig. 4 and Fig. 5, the water purification device 11 is configured by the first drive pump 17, a pretreatment filter 18, the second drive pump 18, and a post-treatment filter 20. The first drive pump 17 is capable of being connected to the water source A by the suction hose 2. The pretreatment filter 18 is disposed on the downstream side of the first drive pump 17. The second drive pump 19 is disposed on the downstream side of the pretreatment filter 18. The post-treatment filter 20 is disposed on the downstream side of the second drive pump 19 and desalinates seawater when the water source A is seawater. A sterilizing means 21 is preferably disposed on the downstream side of the post-treatment filter 20. The sterilizing means 21 configures a portion of the post-treatment filter 20. The outflow hose 4 is connected on the downstream side of the sterilizing means 21 with the other connecting portion 5 therebetween. Clean potable water W can thereby be obtained from the outflow hose 4.

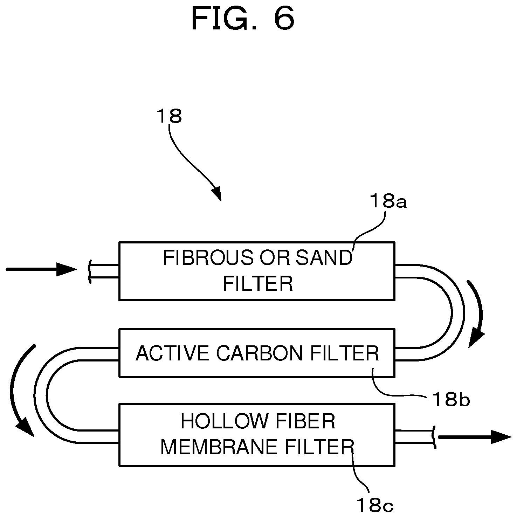

For example, a direct current (DC) 24-volt motor is used as the first drive pump 17. In addition, as shown in Fig. 6, the pretreatment filter 18 is composed of a fibrous filter 18a, an activated carbon filter 18b, and a hollow fiber membrane filter 18c. The fibrous filter 18a is capable of blocking the passage of coarse particles (dust). The activated carbon filter 18b enables mineral water to be obtained. The hollow fiber membrane filter 18c is capable of blocking the passage of fine particles (dust). Although not particularly shown in the drawings, the fibrous filter 18a is composed of a cylindrical container that has openings on both ends and a fibrous filter material that fills the cylindrical container. The fibrous filter material captures relatively coarse dust particles. The fibrous filter 18a may be replaced with a sand filter in which a bag body is packed with sand.

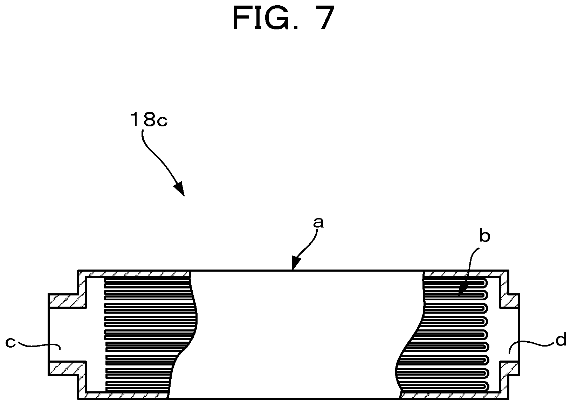

In addition, the pretreatment filter 18 includes at least the hollow fiber membrane filter 18c. For example, as shown in Fig. 7, the hollow fiber membrane filter 18c is composed of a cylindrical container a that has openings c and d on both ends, and a hollow fiber filter cartridge b that is contained within the cylindrical container a. The opening c on the left side in Fig. 7 serves as an inflow opening into which water sent from the first drive pump 17 side flows. Meanwhile, the opening d on the right side in Fig. 7 serves as an exit for filtered water that has passed through the hollow fiber filter cartridge b. As a result of the hollow fiber membrane filter 18c, for example, particles (dust) that have a particle size equal to or greater than 0.1 µ can be removed.

In addition, the post-treatment filter 20 includes a single or plurality of cartridge-type RO membrane filters (reverse-osmosis membrane for seawater) that is capable of desalinating seawater. Furthermore, for example, a DC 24-volt motor is used for the second drive pump 19 in a manner similar to the first drive pump 17. Moreover, the sterilizing means 21 includes iodine as an active ingredient. Therefore, in the post-treatment filter 20, the water that has been desalinated by the RO membrane filter can be highly sterilized by the iodine in the sterilizing means 21. As a result, the water becomes clean potable water. Although not particularly shown in the drawings, for example, a pressure adjustment valve can be provided in an appropriate location on the flow path 16 according to the embodiment. A pressure gauge 28 can monitor the pressure state of the flow path 16.

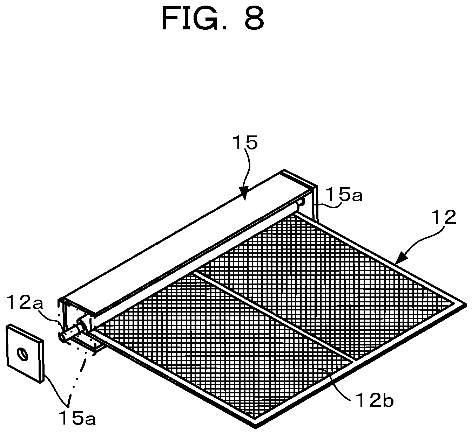

Fig. 8 shows an example of the photovoltaic power generation device 12. With reference to Fig. 8, the photovoltaic power generation device 12 is configured by the bar-shaped rotation shaft 12a and the sheet-shaped solar panel 12b that is wound around the rotation shaft 12a. As shown in Fig. 1 or Fig. 3, when the housing 1 is placed horizontally, the solar panel 12b can be pulled out directly in a substantially horizontal direction from a horizontally elongated cutout window 23 that is formed in one vertical side wall of the housing 1. When the solar panel 12b is pulled out from the cutout window 23, the rotation shaft 12a rotates in a state in which the rotation shaft 12a is supported by left and right side walls 15a and 15a of the above-described second support member 15. The solar panel 12b that is pulled out from the housing 1 enters a state in which the solar panel 12b is spread widely on a ground surface of the land B. Consequently, the amount of power generation can be increased.

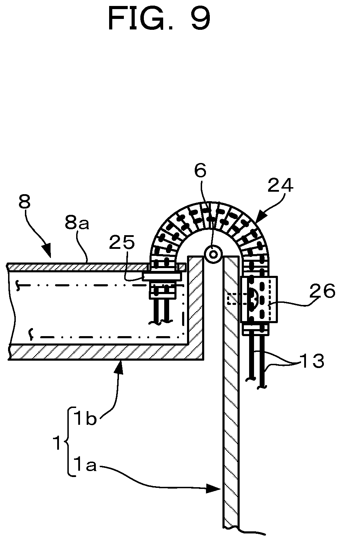

Fig. 9 is an explanatory diagram of an attachment aspect of a conductive line protector 24. The stretchable protector 24 encases a portion or the entirety of an exposed section of the conductive cables 13 running from the case-shaped lid body 1b side to the box-shaped main body 1a side. One end portion of the protector 24 is appropriately fixed through use of a fixture 25 in a state in which the one end portion is inserted into a through-hole in an operating panel 8a (on the lid body side) of the above-described control box 8. Meanwhile, the other end portion of the protector 24 is appropriately fixed through use of a fixture 26 to an inner wall of the box-shaped main body 1a or a support member (on the box-shaped main body 1a side). For example, a flexible pipe or coil spring is used as the protector 24.

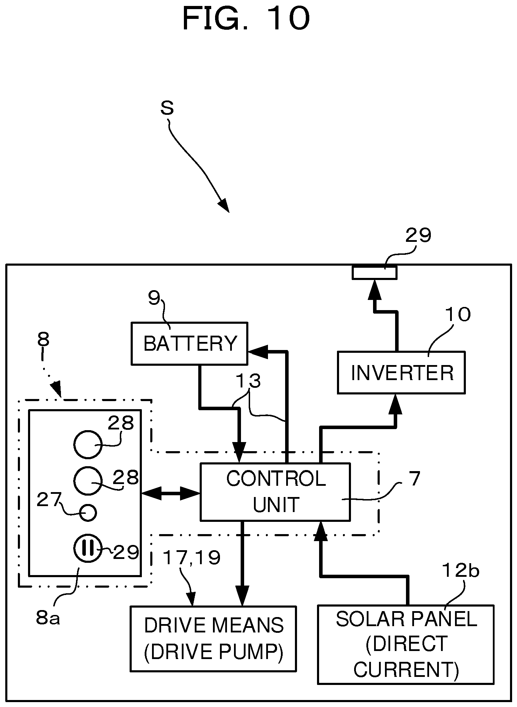

Fig. 10 is a block diagram of a drive control system for the solar panel 12b, the control unit 7 within the control box 8, the batteries 9, and the plurality of drive means 17 and 19. As shown in Fig. 3, when the case-shaped lid body 1b is opened, the operating panel 8a of the control box 8 appears. The operating panel 8a is provided with a plurality of power switches 27 for the drive means 17 and 19, a plurality of pressure gauges 28 respectively indicating the pressure states of the drive means 17 and 19, and an electric outlet 29 for connecting a plug of an external device. Reference number 10 denotes an inverter. The inverter 10 converts electric power charged in the battery 9 to alternating current and outputs the alternating current to an external device (such as a light-emitting diode (LED) bulb or a terminal) via the electric outlet 29.

As described above, the photovoltaic power generation device 12, the single or plurality of batteries 9 that store electricity generated by the photovoltaic power generation device 12 via a charging circuit (not shown), the control unit 7 that receives electric power from the battery 9, and the plurality of drive means 17 and 19 that are controlled by the control unit 7 and use the battery 9 as an electric power source are appropriately provided inside the housing 1 according to the embodiment, and are appropriately electrically connected by wiring.

Therefore, after the housing 1 is carried to the vicinity of the water source A in the disaster location, the housing 1 is placed horizontally on the ground surface. Next, the suction hose 2 and the outflow hose 4 are respectively connected to the connecting portions 3 and 5 on the left and right side walls of the housing 1. Then, the case-shaped lid body 1b is opened and the solar panel 12b is pulled out from the cutout window 23. Subsequently, when a power switch 27 is turned "ON," the drive means 17 and 19 are started. For example, the suction hose 2 draws seawater. The water purification device 11 inside the housing 1 purifies the seawater. Clean potable water W can then be taken out from the outflow hose 4. The solar panel 12b can be wound directly, or through use of a lever handle H (see Fig. 1) that is fitted onto a protruding end portion of the rotation shaft 12a that protrudes from the side wall of the housing 1. In addition, in cases in which lighting is not available, the plug of a piece of LED lighting equipment or the like can be inserted into the electric outlet 29. The drive state of the mobile power generation/water purification system X can thereby be made visible.

### Examples

Here, other mobile power generation/water purification systems X1 and X2 will be described. Fig. 11 and Fig. 12 show the mobile power generation/water purification system X1 according to a second embodiment of the present invention. In addition, Fig. 13 and Fig. 14 show the mobile power generation/water purification system X2 according to a third embodiment of the present invention. In the descriptions of the second and third embodiments, sections that are identical to those according to the first embodiment are given the same reference numbers. Redundant descriptions are omitted.

According to the second embodiment and the third embodiment, housings 1A and 1B are each provided with swivel casters 31 and a rotatable handle 32. First, according to the second embodiment, when one side wall of the housing 1A on which the horizontally elongated cutout window 23 is formed is the front face, a total of four swivel casters 31 are attached to a horizontally elongated bottom wall of the housing 1A. In addition, a pair of handles 32 and 32 are attached to both left and right side walls of the housing 1A.

Next, according to the third embodiment, when the housing 1B is in a vertical state (the four surfaces that have a large area are in the vertical state), a total of four swivel casters 31 are attached to one side wall corresponding to a bottom surface of the housing 1B. Meanwhile, a rotatable handle 23 (a stretchable handle according to the embodiment) is provided on the other side wall corresponding to an upper surface. In this way, the swivel casters 31 and the handle 32 may be appropriately provided on the side walls of the housing 1B according to the third embodiment.

### INDUSTRIAL APPLICABILITY

In particular, the present invention is used as a mobile power generation/water purification system that is capable of being used when water supply is cut due to a disaster such as an earthquake.

## Claims

1. A mobile power generation/water purification system comprising, in a housing thereof:
a photovoltaic power generation device;
a battery that stores electricity generated by the photovoltaic power generation device;
a control unit that receives electric power from the battery; and
a drive means that is controlled by the control unit and uses the battery as an electric power source, wherein
the housing is composed of a box-shaped main body that has an opening in an upper end and a case-shaped lid body that is provided in an openable/closable manner in the box-shaped main body with a hinge therebetween,
a water purification device is disposed inside the housing in a single flow path that can be connected to a suction hose and an outflow hose by respective connecting portions,
the drive means of the water purification device is a plurality of drive pumps,
the drive pumps are electrically connected to the battery by respective conductive cables,
the photovoltaic power generation device is a solar panel that is wound around a rotation shaft inside the housing, and
the solar panel can be pulled out directly from a horizontally elongated cutout window formed on one side wall of the housing.

2. The mobile power generation/water purification system according to claim 1, wherein:
the water purification device is configured by a first drive pump that can be connected to a water source by the suction hose, a pretreatment filter that is disposed on a downstream side of the first drive pump, a second drive pump that is disposed on the downstream side of the pretreatment filter, and a post-treatment filter that is disposed on the downstream side of the second drive pump and desalinates seawater when the water source is seawater.

3. The mobile power generation/water purification system according to claim 1, wherein:
the pretreatment filter includes at least a hollow fiber membrane filter, while the post-treatment filter includes a reverse-osmosis membrane filter.

4. The mobile power generation/water purification system according to claim 1, wherein:
the housing is that in which a control box for the control unit and the battery are housed in a fixed manner in a recessing space in the case-shaped lid body, while the water purification device and the solar panel including the rotation shaft are housed in a recessing space in the box-shaped main body, a stretchable protector encases an exposed section of the conductive cables running from the case-shaped lid body side to the box-shaped main body side, and one end portion of the protector is fixed to the control box side while another end portion thereof is fixed to the box-shaped main body side.

5. The mobile power generation/water purification system according to claim 4, wherein:
an operating panel of the control box appears when the case-shaped lid body is opened, and the operating panel is provided with at least a power switch and a pressure gauge for the drive means.

6. The mobile power generation/water purification system according to claim 1, wherein:
the housing is a rectangular parallelepiped in shape and can be carried with both hands, a plurality of swivel casters are attached to one side wall of the housing, and a handle is provided on another side wall thereof.
